# NEUE EUROPÄISCHE PATENTSCHRIFT

(11) **EP 1 817 972 B2**
(45) Veröffentlichungstag und Bekanntmachung des Hinweises auf die Entscheidung über den Einspruch: **08.08.2012**
(45) Hinweis auf die Patenterteilung: 15.04.2009
(21) Anmeldenummer: 07101876.6
(22) Anmeldetag: 07.02.2007
(51) Int. Cl.: C09J 7/02, A44B 18/00, B60R 16/02, B32B 27/12, D04B 21/02, D04B 23/08

(54) **Auf sich selbst wickelbares Klebeband mit textilem Träger**
Adhesive tape rollable on itself with textile underlay
Bande adhésive pouvant s'enrouler sur elle-même dotée d'un support textile

(30) Priorität: 11.02.2006 DE 202006002210 U
(43) Veröffentlichungstag der Anmeldung: 15.08.2007
(73) Patentinhaber: Coroplast Fritz Müller GmbH & Co. KG, 42279 Wuppertal (DE)
(72) Erfinder: LODDE, Christoph, 44229, Bochum (DE); FRIGGE, Christoph, 45549, Sprockhövel (DE)
(74) Vertreter: Patentanwälte Dr. Solf & Zapf

(56) Entgegenhaltungen:
- EP-A- 0 971 060
- EP-A- 0 978 583
- EP-A- 1 022 835
- EP-A- 1 129 639
- DE-A1- 19 908 874
- DE-U1- 9 421 907
- DE-U1- 29 916 616
- US- - 4 761 318

## Beschreibung

Die vorliegende Erfindung betrifft ein auf sich selbst wickelbares Klebeband nach dem Oberbegriff des Anspruchs 1, mit einem bandförmigen textilen Träger, der aus einer aus Fasern und/oder Fäden gebildeten textilen Basisschicht besteht, der auf seiner Oberseite klettfähige Schlaufen aufweist und auf dessen Unterseite eine, insbesondere selbstklebende, Klebstoffbeschichtung aufgebracht ist.

Kabelsätze werden, insbesondere im Automobilbereich, gewöhnlich mit Klebebändern umwickelt. Neben der reinen Bündelungsfunktion haben dabei vor allem textile Klebebänder mittlerweile zahlreiche Zusatzfunktionen, wie den Schutz der Leitungen vor Abrieb oder die Dämpfung von Klapper- oder Vibrationsgeräuschen, übernommen. Weit verbreitet sind Gewebeklebebänder aus Zellwolle oder Polyester, Veloursbänder aus Polyester und Polyamid und verschiedene, meist ebenfalls auf Polyester basierende Vliesklebebänder. Letztere, insbesondere in einer Ausführung als Nähvliesbänder, zeichnen sich bei hohem Gebrauchswert durch einen geringen Herstellungsaufwand aus und sind ebenso gut zu verarbeiten wie Zellwoll-Gewebebänder. Daher haben Vliesbänder Zellwoll-Gewebebänder in weiten Bereichen verdrängt.

Bei Verwendung von Klebebändern mit einem klettfähigen Träger, der auf seiner Oberseite klettfähige Schlaufen aufweist, können die Kabelsätze mit Hilfe geeigneter an der Karosserie befestigter Hakenteile im Klettverfahren verlegt werden. Ein solches Hakenteil ist beispielsweise in der US-A-4 931 343 beschrieben, welche sich auf ein blattförmiges Material bezieht, das zur Fertigung von Befestigungselementen in kleinere Teile zerschnitten werden kann. Zur Herstellung des Blattmaterials wird ein relativ starrer, selbsttragender Polymerfilm mit einem Garn durchstochen, wodurch eine Vielzahl von Schleifen entsteht, aus denen wahlweise Pilz-, Haken oder Harpunenköpfe gebildet werden können. Auf der den Köpfen abgewandten Seite kann dabei das Garn zu seiner Befestigung in eine thermisch aufgeschmolzene Oberfläche des selbsttragenden Polymerfilms eingebettet werden.

Die Vorteile des Einsatzes von klettfähigen Klebebändern im Automobilbau bestehen vor allem in einer Zeitersparnis beim Einbau der Kabelsätze, im einfachen Einbau, bei dem vergleichsweise niedrigere Anforderungen an die Maßhaltigkeit gestellt werden, und in einer großen Zahl von Verlegungsmöglichkeiten, da die Klettsysteme auch an schwer zugänglichen Stellen angebracht werden können.

Zur Herstellung von Klebebändern der eingangs genannten Art wird als Trägermaterial beispielsweise Velours eingesetzt, wobei Klebebänder mit einem solchen Träger den Vorteil aufweisen, ausgezeichnete Geräuschdämpfungseigenschaften und - insbesondere bei Einsatz von Polyamid als Fasermaterial - eine hohe Abriebbeständigkeit aufzuweisen. Sie haben aber den Nachteil, auf Grund der hohen Kosten für Velours relativ teuer zu sein. Zudem sind sie in der Regel nicht von Hand reißbar. Ihr Einsatz ist daher auf Spezialfälle beschränkt.

Was die textiltechnische systematische Einordnung von Velours betrifft, so werden textile Flächengebilde grundsätzlich in Flach- oder Glattwaren, zu denen in der Regel Gewebe, Vliese sowie glatte Gewirke gezählt werden, und in Flor- oder Polwaren, unter denen Velours, Samt, Plüsch etc. verstanden werden, eingeteilt. Bei den bekannten klettfähigen Trägermaterialien für Klebebänder handelt es sich dabei insbesondere um Velours, die über einen Pol- oder Faserflor verfügen. Sie werden daher auch als Polstoffe bezeichnet, welche entsprechend der DIN 62055 als textile Flächengebilde mit ein- oder beidseitig aus einer Grundschicht herausragenden polschichtbildenden Fäden oder Fasern definiert sind.

Ein spezielles Velours-Klebeband der eingangs genannten Art ist in der EP-B-1 022 835 beschrieben und weist insbesondere den Vorteil auf, auf sich selbst wickelbar zu sein, d. h. die Klebstoffschicht braucht beim Aufwickeln des Bandes zu einer Rolle nicht mit einem Interliner abgedeckt zu werden. Dieses bekannte Band hat einen bandförmigen textilen Träger, der auf seiner Oberseite klettfähige Schlaufen aufweist und auf dessen Unterseite eine Grundierungsschicht und auf der Grundierungsschicht eine selbstklebende Schicht aufgetragen ist. Die Grundierungsschicht weist ein spezifisches Flächengewicht von weniger als 20 g/m² auf. Als textiler Träger wird dabei bevorzugt ein Wirkvelours, insbesondere ein Kettengewirk, eingesetzt, das aus einer sogenannten Maschenseite und aus einer glatten Rückseite besteht. Dabei ist es von Vorteil, wenn in dem Kettengewirk zwei Fadenketten, insbesondere zwei gleichlegige Ketten, vorzugsweise eine Oberkette mit Satinbindung und eine Unterkette mit Trikotbindung, verarbeitet sind. So können in herstellungstechnisch vorteilhafter Weise einerseits die verschlaufte Maschenseite und andererseits die glatte Rückseite des Wirkvelours in der gewünschten Qualität hergestellt werden. Die glatte Rückseite ist mit der Grundierungsschicht versehen, um die Verfestigung des Wirkvelours zu erreichen, wodurch das Veloursmaterial extrem schmiegsam ist, so dass sich langgestrecktes Gut, insbesondere Kabelsätze, einwandfrei bandagieren lassen. Die Schmiegsamkeit ist dabei vergleichbar mit der Schmiegsamkeit eines Zellwoll-, oder PET-Gewebes oder eines PET-Nähvlieses. Die Maschendichte des Gewirks des Trägers kann bei diesem bekannten Band im Bereich von etwa bei 19000 Maschen pro dm² und 38000 Maschen pro dm² liegen.

Ähnliche Klebebänder wie in der EP-B-1 022 835 sind auch in der DE-U-94 21 907 und in der EP-B-1 136 535 beschrieben. Bei dem Band der EP-B-1 136 535 weist der schlaufenbildende Träger eine Maschendichte von mehr als 5.000 pro dm² auf. Optional ist - der Grundierungsschicht der EP-B-1 022 835 entsprechend - eine verfestigende, sogenannte nichttextile Maschengrundschicht vorgesehen. Das Trägerband ist als Kettengewirk aus zwei Fadenketten zusammengesetzt, wobei vorzugsweise eine Unterkette mit Trikotbindung und eine Oberkette mit Samtbindung oder Supersamtbindung vorliegen. Beiden bekannten Klebebändern ist gemeinsam, dass es sich bei ihrem jeweiligen Träger um eine kettengewirkte Polware handelt.

Die Prüfung von Klebebändern für die Bewicklung von Kabelsätzen erfolgt in der Automobilindustrie zumeist nach umfangreichen Normenwerken, wie sie z. B. in der LV 312 "Klebebänder für Kabelsätze in Kraftfahrzeugen" (1/2005) als gemeinsame Prüfrichtlinie der Firmen Audi, BMW, DC und VW zusammengefasst sind. Als anwendungstechnisch wichtige Prüfungen sind in dieser Richtlinie beispielsweise Prüfmethoden für das Geräuschdämpfungsverhalten und die Abriebbeständigkeit beschrieben, die unter spezifischen Belastungsbedingungen durchgeführt werden. Im Ergebnis der Prüfmethoden werden die untersuchten Klebebänder je nach den beim Test erzielten Eigenschaften jeweils in fünf Klassen eingeteilt, welche in den nachfolgenden Tabellen 1 und 2 wiedergegeben sind. So können für die entsprechenden Produkteigenschaften die Forderungen nach "sehr hoher Geräuschdämpfung" oder "hohem Abriebschutz" gemäß der entsprechenden Klasseneinteilung quantifiziert untersetzt werden, wie dies auch direkt durch entsprechende Messwerte für die Forderungen nach "guter Klettfähigkeit" und "guter Klettscherfestigkeit" möglich ist, welche ebenfalls an Klebebänder der eingangs genannten Art gestellt werden.

**Tabelle 1: Einteilung der geräuschdämmenden Eigenschaften nach LV 312**

| Geräusch-Dämpfungsklasse | Anforderung |
|---|---|
| A - keine | 0 bis ≤ 2 dB(A) |
| Geräuschdämpfung | |
| B - geringe | > 2 bis ≤ 5 dB(A) |
| Geräuschdämpfung | |
| C - mittlere | > 5 bis ≤ 10 dB(A) |
| Geräuschdämpfung | |
| D - hohe | > 10 bis ≤ 15 dB(A) |
| Geräuschdämpfung | |
| E - sehr hohe | > 15 dB(A) |
| Geräuschdämpfung | |

**Tabelle 2: Einteilung der Abriebeigenschaften nach LV 312**

| Abriebklasse | Anforderung |
|---|---|
| A - kein Abriebschutz | < 100 Hübe |
| B - geringer | 100 - 499 Hübe |
| Abriebschutz | |
| C - mittlerer | 500 - 999 Hübe |
| Abriebschutz | |
| D - hoher Abriebschutz | 1000 - 4999 Hübe |
| E - sehr hoher | ≥ 5000 Hübe |
| Abriebschutz | |

Der vorliegenden Erfindung liegt die Aufgabe zu Grunde, ein in der Herstellung wenig aufwändiges, auf sich selbst wickelbares Klebeband der eingangs genannten Art zu schaffen, das eine hohe Geräuschdämpfung aufweist und die klettfähige Verlegung von Kabelsätzen ermöglicht. Insbesondere soll dabei das erfindungsgemäße Klebeband auch die Anforderungen mindestens für die jeweiligen Klassen D für die Geräuschdämpfungs- und Abriebeigenschaften entsprechend der vorstehend genannten Prüfrichtlinie erfüllen.

Diese Aufgabe wird mit einem Klebeband der eingangs genannten Art gemäß Anspruch 1 gelöst, bei dem die klettfähigen Schlaufen als geschlossene Polschlingen durch mindestens ein zusätzlich zu den Fasern und/oder Fäden der textilen Basisschicht vorhandenes Fadensystem gebildet sind.

Das zusätzliche Fadensystem kann dabei bevorzugt durch ein Übernähen der textilen Basisschicht, beispielsweise eines Grundvlieses aufgebracht werden, wobei bei dem Übernähen mit Vorteil sogenannte Kettenwirkmaschinen zum Einsatz kommen können. Die Polbildung durch das zusätzliche Fadensystem kann wahlweise durch ein Nähen, Wirken oder bevorzugt durch ein Nähwirken erfolgen, wobei das zusätzliche Fadensystem vorteilhafterweise aus einem Garn aus einem Polyolefin, insbesondere Polypropylen, aus einem Polyamid, insbesondere PA 6 oder PA 6.6, oder einem Polyester, insbesondere PET, bestehen kann.

Die textile Basisschicht kann dabei wahlweise aus einem Gewebe, einem Gewirk oder aus einem Vlies, insbesondere aus einem Nähvlies, gebildet sein und vorzugsweise aus Zellwoll- oder aus Synthesefasern bestehen. Ein spezifisches Flächengewicht der textilen Basisschicht kann dabei mit Vorteil im Bereich von etwa 20 bis 300 g/m², vorzugsweise im Bereich von etwa 120 bis 200 g/m², liegen.

Ein Träger, bei dem die textile Basisschicht durch Nähwirken unter Einsatz einer Polplatineneinrichtung mit den Polschlingen versehen wird, ähnelt dabei vom Erscheinungsbild her einem Frotteestoff bzw. auch einem Baumwoll- oder Rippensamt. Im Gegensatz zur Fertigungsweise mancher anderer Polstoffe werden die Polschlingen dabei nicht aufgeschnitten, sondern bleiben geschlossen. Hierzu ist unter dem Namen Malipol® auch ein spezielles seit langem industriell eingeführtes Verfahren an sich bekannt, für das eine entsprechende Kettenwirkmaschine in der DE-B-1 195 426, auf die hier in vollem Umfang verwiesen wird, beschrieben ist. Heutzutage werden derartige moderne Hochleistungsnähwirkmaschinen zur Herstellung einseitiger Polwaren eingesetzt, um Reinigungstextilien, wie Wischmops, oder Decken herzustellen. In diesen Maschinen erfolgt die Einbindung von Polfäden in eine Grundware mit Hilfe von Schiebernadel-, Schließdraht- und maschenbildenden Legebarren für Polfäden sowie mit Hilfe von Polplatinen- und Abschlagplatinenbarren und Stützschienen. Solchermaßen gefertigte Ware zeichnet sich insbesondere durch eine sehr hohe Schlingenfestigkeit aus, wobei die Feinheiten bevorzugt durch eine Anordnung von 3, 5, 10, 12 oder 14 Nadeln auf 2,5mm erzeugt werden und bei üblichen Flächengewichten von 300 bis 1500 g/m² Polhöhen H von 1, 2, 3, 4, 5, 6, 7, 9, 11 oder 23 mm gefertigt werden.

Das erfindungsgemäße Klebeband verfügt bei kostengünstig möglicher Herstellungsweise über eine sehr gute Klettfähigkeit, einen hohen Abriebschutz und eine starke Geräuschdämpfung - somit über vorteilhafte Eigenschaften, die es insbesondere für die eingangs genannten Einsatzbereiche prädestinieren, aber auch mit Vorteil eine Anwendung zur Substitution von Schaumpolstern, wie sie z. B. bei abgedeckten Stanzformen zum Einsatz kommen, ermöglichen. Des Weiteren ist insbesondere von Vorteil, dass beim Aufwickeln des erfindungsgemäßen Klebebandes zu einer Rolle ein Flachlegen der klettfähigen Schlaufen vermieden werden kann, da die Polschlingen beim Wickeln des Bandes auf sich selbst stabil und aufrecht stehen bleiben. Umgekehrt kommt es beim Abrollen des Bandes nicht zu Faser- oder Fädenausrissen aus der Trägerschicht durch die Klebstoffbeschichtung der darüber liegenden Bandlage, wobei es möglich ist, das Band ohne die Verwendung eines Interliners auf sich selbst zu einer Rolle und davon wieder herunter zu wickeln.

Die voluminöse, aber dichte und gleichmäßige Struktur der Polschicht, die sich insbesondere dann ergibt, wenn die Polschlingen des zusätzlichen Fadensystems eine Maschenreihendichte im Bereich von etwa 7 bis 22, vorzugsweise von etwa 18, pro 2,5 cm Polhöhe von etwa 1 mm bis 8 mm, vorzugsweise von etwa 2 mm bis 4 mm, eine Maschenstäbchendichte im Bereich von etwa 5 bis 18, vorzugsweise von etwa 13, pro 2,5 cm aufweisen, führt vorteilhafterweise auch dazu, dass die Fasern der Polschicht sich beim Aufwickeln des erfindungsgemäßen Klebebandes nicht derart legen können, dass sie beim oder nach einem Abwickeln von einer Rolle in irgendeiner Weise wieder aufgerichtet werden müßten, um in einen klettfähigen Zustand zu gelangen. Die erfindungsgemäß ausgebildete Polschicht führt mit Vorteil somit insbesondere dazu, dass sich die Pole stets in einem Zustand darbieten, der eine Verklettung mit geeigneten komplementären Teilen gestattet, was sich günstig im Hinblick auf eine einfache Montage des erfindungsgemäßen Klebebandes auswirkt.

Weitere vorteilhafte Ausführungen der Erfindung sind in den Unteransprüchen und der nachfolgenden speziellen Beschreibung enthalten. Anhand eines Ausführungsbeispiels, das einem Vergleichsbeispiel gegenübergestellt wird, wird dabei unter Bezugnahme auf die Zeichnung die Erfindung dabei näher erläutert.

Dabei zeigen
- Fig. 1: einen Querschnitt durch ein erfindungsgemäßes Klebeband,
- Fig. 2: eine schematisierte Darstellung zur Veranschaulichung einer bevorzugten Herstellungsweise eines Trägers eines erfindungsgemäßen Klebebandes,
- Fig. 3: eine mikroskopische Aufnahme der Unterseite eines Trägers eines erfindungsgemäßen Klebebandes,
- Fig. 4: in größerem Maßstab, eine mikroskopische Aufnahme der Oberseite eines Trägers des in Fig. 3 gezeigten erfindungsgemäßen Klebebandes,
- Fig. 5: eine mikroskopische Aufnahme der Unterseite eines Trägers eines bekannten, zum Vergleich herangezogenen Velours-Klebebandes,
- Fig. 6: in größerem Maßstab, eine mikroskopische Aufnahme der Oberseite eines Trägers des in Fig. 5 gezeigten bekannten, zum Vergleich herangezogenen Velours-Klebebandes.

In den verschiedenen Figuren der Zeichnung sind gleiche Teile stets auch mit den gleichen Bezugszeichen versehen, so dass sie in der Regel auch jeweils nur einmal beschrieben werden.

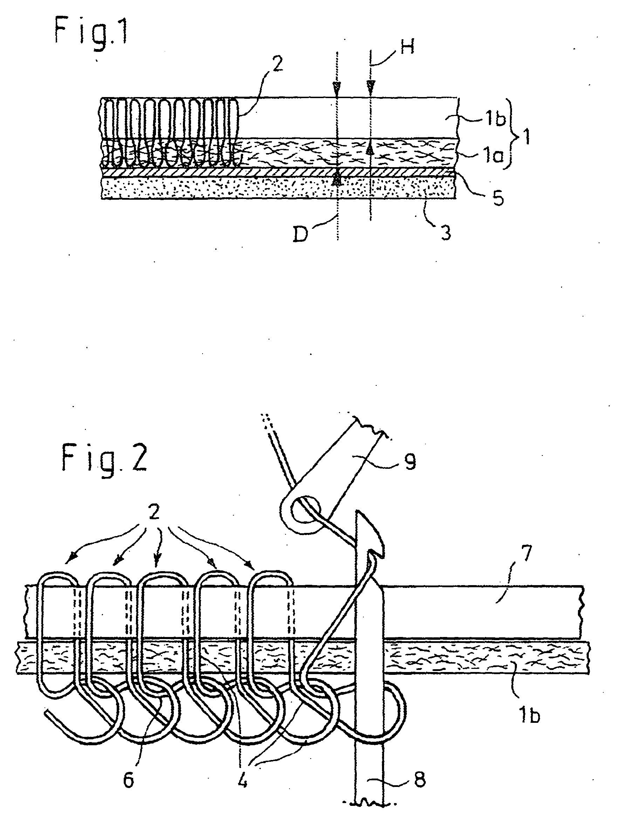

Wie zunächst aus Fig. 1 hervorgeht, weist ein erfindungsgemäßes, auf sich selbst wickelbares Klebeband einen bandförmigen textilen Träger 1 auf, der auf seiner Oberseite klettfähige Schlaufen 2 aufweist und auf dessen Unterseite eine selbstklebende Klebstoffbeschichtung 3 aufgebracht ist. Der textile Träger 1 besteht dabei aus einer textilen Basisschicht 1a, die aus einem Vlies gebildet ist und auf deren Oberseite durch mindestens ein zusätzliches Fadensystem, das in Fig. 2 mit dem Bezugszeichen 4 bezeichnet ist, die klettfähigen Schlaufen als geschlossene, in einer Polschicht 1b liegende Polschlingen 2 gebildet sind.

Unter einem zusätzlichen Fadensystem 4 wird dabei insbesondere ein Fadensystem 4 verstanden, das zusätzlich zu den Fäden oder Fasern vorhanden ist, die die textile Basisschicht 1a bilden. Das zusätzliche Fadensystem 4 könnte somit auch als "externes" System bezeichnet werden, weil es der Basisschicht 1a nicht zugehörig ist, insofern es erst in einem nachträglichen Bearbeitungsschritt mit der Basisschicht 1a verbunden wird.

Das Vlies der textilen Basisschicht 1a sollte bereits in verfestigtem Zustand vorliegen, wobei auf verschiedenartige Weise verfestigte Vlieswerkstoffe, wie Vlies-Nähgewirke, insbesondere vom Typ Malivlies®, und Nadelvliese als Ausgangsbasis für die Basisschicht 1a des Träger 1 dienen können. Auch chemisch, thermisch oder andersartig verfestigte Vliese können zum Einsatz kommen. Im dargestellten Fall handelt es sich um eine Basisschicht 1a, die aus einem Vlies-Faden-Nähgewirk vom Typ Maliwatt® hergestellt ist.

Das Flächengewicht der Basisschicht 1a des Trägers 1 des erfindungsgemäßen Klebebandes kann insbesondere im Bereich von 20 bis 300 g/m², vorzugsweise im Bereich von 80 bis 150 g/m², und eine mittlere, bei einem Auflagedruck von 2000 Pa gemessene Dicke D des Trägers 1 im Bereich von 0,3 bis 3,0 mm, vorzugsweise von 1,1 bis 2,4 mm liegen. Die Basisschicht 1a des Trägers 1 kann dabei bevorzugt aus Zellwoll- oder Synthesefasern, wie Polyester, Polypropylen oder Polyamid oder aus einer Mischung dieser Polymeren bestehen, während das zusätzliche Fadensystem 4 aus einem Polyolefin, insbesondere Polypropylen, aus einem Polyamid, insbesondere PA 6 oder PA 6,6, oder einem Polyester, insbesondere PET, bestehen kann. Der Träger 1 kann dabei in Längsrichtung eine Reißdehnung im Bereich von etwa 10 bis 80 Prozent und eine Reißfestigkeit von etwa 20 bis 300 N/cm, vorzugsweise von 25 bis 70 N/cm, aufweisen.

Durch eine große Zahl senkrecht von der Basisschicht 1a abstehender Polschlingen 2 kann das erfindungsgemäße Klebeband auch eine Druck- oder Schlagbeanspruchung gut elastisch auffangen, da mit steigender Polzahl die Standfestigkeit der Schlingen erhöht wird. Dies bewirkt wiederum auch ein gutes Geräuschdämpfungsverhalten. Unter diesem Gesichtspunkt ist es von Vorteil, wenn die Polschlingen 2 des zusätzlichen Fadensystems 4 eine Reihendichte im Bereich von etwa 7 bis 22, vorzugsweise von etwa 18, pro 2,5 cm und eine Stäbchendichte im Bereich von etwa 5 bis 18, vorzugsweise von etwa 13, pro 2,5 cm aufweisen. Außerdem ist es unter diesem Gesichtspunkt auch von Vorteil, wenn die Polschlingen 2 des zusätzlichen Fadensystems 4 eine Polhöhe H von etwa 1 mm bis 8 mm, vorzugsweise von etwa 2 mm bis 4 mm, aufweisen.

Was die Klebstoffbeschichtung 4 betrifft, so werden dafür als druckempfindliche Haftklebstoffe Acrylatklebstoffe, insbesondere UV-vernetzbare Acrylatklebstoffe, Synthese- und auch Naturkautschukklebstoffe eingesetzt. Klebebänder mit Acrylatklebstoffen zeichnen sich durch niedrige Foggingwerte, eine hohe Resistenz gegen verschiedene Chemikalieneinflüsse und durch eine ausgezeichnete Kompatibilität mit verschiedenen Leitungen aus.

Um die bei der spiralförmigen Bewicklung von Kabelsätzen erforderlichen Haftwerte auf dem Bandrücken zu erreichen, wird mit Auftragsgewichten der Klebstoffbeschichtung von etwa 20 bis 300 g/m², vorzugsweise von 80 bis 150 g/m², besonders bevorzugt von 100 bis 120 g/m², gearbeitet. Der Klebstoff kann sowohl direkt auf die Unterseite der textilen Basisschicht 1a aufgebracht werden, die Basisschicht kann aber auch - wie dargestellt - durch eine Beschichtung 5 kaschiert sein, wodurch durch das Fadensystem 4 gebildete Polfüße - in Fig. 2 mit dem Bezugszeichen 6 bezeichnet - mit der textilen Basisschicht 1a stoffschlüssig verbunden sind.

Wie bereits erwähnt, ist es grundsätzlich möglich, dass das zusätzliche Fadensystem durch Nähen, Wirken, Weben oder Nähwirken gebildet ist. So können auf Webmaschinen bei der Herstellung von Samten, Plüschen und Velours Pole nach verschiedenen Techniken in einem Arbeitsgang gefertigt werden, wobei die Polschlingen 2 durch ein zusätzliches Fadensystem 4 gebildet und dann aufgeschnitten werden oder - wie erfindungsgemäß vorgesehen - unaufgeschnitten bleiben können.

Fig. 2 veranschaulicht, wie bereits erwähnt, eine bevorzugte Herstellungsweise eines Trägers 1 eines erfindungsgemäßen Klebebandes, bei der es sich um das ebenfalls schon erwähnte, unter dem Namen Malipol® bekannte Verfahren handelt, mittels dessen in vergleichsweise technologisch wenig aufwändiger Weise auf einer Kettenwirkmaschine unter Bildung der Polschlingen 2 die Einbindung des zusätzlichen Fadensystems 4 in die textile Basisschicht 1a erfolgen kann. Unabhängig von der tatsächlichen Fertigungsanordnung ist dabei der zu fertigende Träger 1 im Sinne einer größeren Übersichtlichkeit ebenso ausgerichtet dargestellt wie in Fig. 1.

Wie aus Fig. 2 zu entnehmen ist, wird verfahrensgemäß über der Basisschicht 1a des Trägers 1 eine Platine 7 angeordnet. Mittels einer Schiebernadel 8 und einer Lochnadel 9, durch die der Faden des Fadensystems 4 gezogen wird, erfolgt dabei der Nähwirkprozess, wobei die Polschlingen 2 mittels der Nadeln 8, 9 jeweils durch eine Umschlingung der Platine 7 gebildet werden. Nach einem Herausziehen der Platine 7 aus dem textilen Verbund wird dann die in Fig. 1 dargestellte, durch die Polschlingen 2 gebildete Polschicht 1a sichtbar. Die Maschen an der Unterseite der Basisschicht 1a - vorstehend auch als Polfüße 6 bezeichnet - können nach dem Nähwirken durch eine Beschichtung kaschiert werden.

Folgende Ausführungen eines Klebebandes wurden vergleichend hergestellt und geprüft.

### Beispiel 1 - erfindungsgemäßes Klebeband

Es wurde ein auf sich selbst wickelbares Klebeband hergestellt, indem zur Herstellung eines bandförmigen Trägers 1 ein PET-Nähvlies mit einem Flächengewicht von 80 g/m² als Basisschicht 1a durch Kettenwirken in ein zusätzliches Fadensystem 4 mit einer Fadenfeinheit von 50 dtex eingebunden wurde, wobei auf der Oberseite des Trägers 1 klettfähige Schlaufen als geschlossene Polschlingen 2 mit einer Polhöhe H von etwa 4 mm gebildet wurden. Auf seiner Unterseite, die optional mit einer Grundierung 5 versehen war, wurde der so gebildete Träger 1 mit ca. 80 g/m² eines UV-vernetzenden Acrylatklebstoffs beschichtet. Das Acrylat wurde zur Bildung einer Klebebeschichtung 3 vernetzt und das Material auf sich selbst gewickelt. Anschließend wurde die so gebildete Rolle in gewünschter Weise als auf sich selbst gewickeltes Klebeband konfektioniert.

### Beispiel 2 - Vergleichsbeispiel

Es wurde ein auf sich selbst wickelbares Velours-Klebeband hergestellt, indem zur Bildung eines bandförmigen Trägers 10 ein aus Polyamid bestehendes Wirkvelours mit einem Flächengewicht von 168 g/m² eingesetzt wurde. Ein solches Wirkvelours weist oberseitig eine Schlaufen 20 bildende Maschenseite und eine im Vergleich dazu glatte Unterseite auf. Auf der Unterseite, die mit einer Grundierung versehen war, wurde der Träger 10 mit ca. 80 g/m² eines UV-vernetzenden Acrylatklebstoffs beschichtet. Das Acrylat wurde zur Bildung einer Klebebeschichtung vernetzt und das Material auf sich selbst gewickelt. Anschließend wurde die so gebildete Rolle in gewünschter Weise als auf sich selbst gewickeltes Klebeband konfektioniert.

In der nachstehenden Tabelle 3 sind die technischen Eigenschaften der klettfähigen Träger 1, 10 der so hergestellten Klebebänder (B1 - Beispiel 1, B2 - Beispiel 2) im Vergleich aufgeführt.

Unter dem in Spalte 1 der Tabelle 3 genannten Aplix 224 wird dabei ein spezielles Hakenteil der Firma Aplix verstanden, das zur Bestimmung der entsprechenden Kenngrößen der ausgebildeten Klettverbindung benutzt wurde.

Gemäß den obigen Tabellen 1 und 2 erfüllt somit das erfindungsgemäße Klebeband die Kriterien der jeweiligen Klasse E der LV 312 für die Geräuschdämpfung und Klasse D für den Abrieb, während das Vergleichsklebeband ebenfalls die Kriterien der Klasse E für die Geräuschdämpfung sowie E für den Abrieb bei Verwendung eines 10 mm Dorns und D für den Abrieb bei Verwendung eines 5 mm Dorns erfüllt.

Die Beispielausführungen zeigen, dass ein erfindungsgemäßes Klebeband eine zur Bewicklung von Kabelsätzen ausreichende Reißfestigkeit und Klebkraft aufweist.

**Tabelle 3: Technische Daten der klettfähigen Träger 1, 10**

| Prüfung | Einheit | B1 | B2 |
|---|---|---|---|
| Trägermaterial | --- | Maliwatt mit 4 mm Pol | PA-Velours |
| Flächengewicht | g/m² | 180 | 168 |
| Mechanische Werte | | | |
| Dicke DIN EN ISO 2286 | mm | 1,6 - 1,7 | 1,0 - 1,2 |
| Reißdehnung | % | 18,3 - 20,16 | 38 - 43 |
| Reißfestigkeit | N/cm | 33,2 - 36,6 | 115 - 126 |
| Quereinreißbarkeit | --- | nein | nein |
| Klebkraft | | | |
| Stahl | N/cm | 8,3 - 10,4 | 4,6 - 5,3 |
| Bandrücken | N/cm | 2,5 - 3,5 | 2,2 - 3,4 |
| Abrollkraft mit 300 mm/min. | N | 3,8 - 4,7 | 2,2 - 3,5 |
| Klettkraft | | | |
| Aplixhakenteil 224 | N/cm | 5,5 - 7,2 | 5,2 - 7,0 |
| Binder: Pilzkopfhakenteil | N/cm | 6,2 - 6,5 | --- |
| Klettscherfestigkeit | | | |
| Aplix 224 | N | 63 - 70 | 50 - 55 |
| Binder | N | 61 - 70 | --- |
| Flagging | | | |
| 5 min | mm | 0 | 0 |
| 24 h | mm | 2-3 | 2-3 |
| Geräuschdämpfung | db(A) | 20 | 20 |
| Abrieb | | | |
| 10 mm Dorn | Hübe | 4400 - 5400 | 9000 - 13000 |
| 5 mm Dorn | Hübe | 1100 - 1300 | 3000 - 3500 |

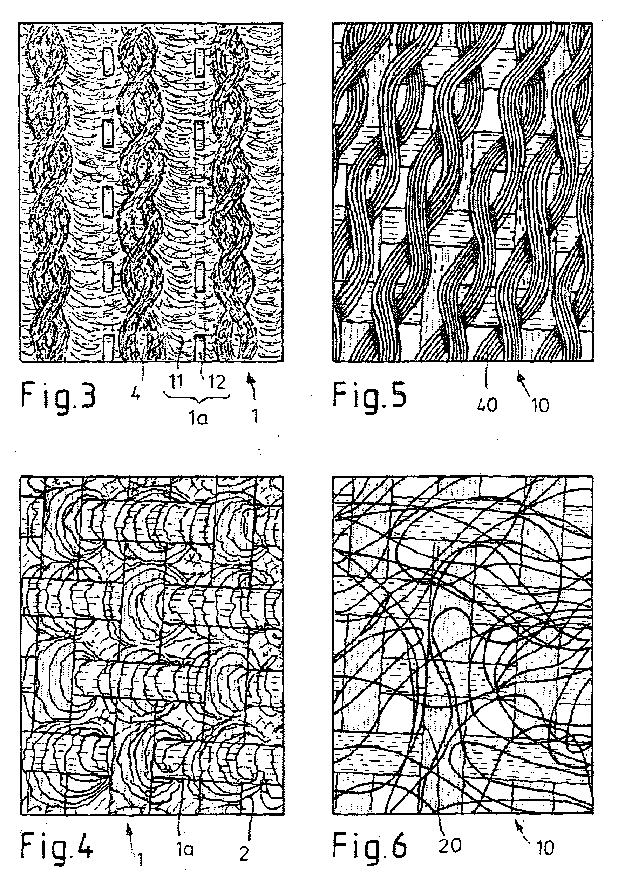

Fig. 3 bis 6, die mikroskopische Aufnahmen der Unter- und Oberseiten der Träger 1, 10 der gemäß den vorstehenden Angaben hergestellten Klebebänder im Vergleich zeigen, veranschaulichen weitere strukturelle Details und Vorteile des erfindungsgemäßen Klebebandes.

Ein Vergleich der Unterseiten der Träger 1, 10 der Beispiel-Klebebänder zeigt, dass bei dem erfindungsgemäßen Klebeband (Fig. 3) das zusätzliche Fadensystem 4 vorhanden ist, mittels dessen die Basisschicht 1a durch zusätzliches Übernähen bzw. Nähwirken eingebunden ist, während bei dem Vergleichsklebeband (Fig. 5) nur das Garnmaterial 40 der Maschenware erkennbar ist, durch die die klettfähigen Schlaufen 20 gebildet werden.

Es ist auch erkennbar, dass es sich bei der textilen Basisschicht 1a des erfindungsgemäßen Klebebandes um ein Vlies 3 handelt, insbesondere um ein Vlies-Faden-Nähgewirk vom Typ Maliwatt®, was durch die deutlich unterscheidbaren Vliesfasern 11 und Nähfäden 12 veranschaulicht wird.

Ein Vergleich der Rückseiten der Klebebänder zeigt, dass bei dem erfindungsgemäßen Klebeband (Fig. 4) durch das zusätzliche Fadensystem 4, welches vorzugsweise aus einem Garn gebildet ist und insbesondere eine Stärke von 35 bis 167 dtex, vorzugsweise von 50 bis 70 dtex, aufweist, die klettfähigen Schlaufen 2 als geschlossene Polschlingen 2 aus den auseinander gefächerten, jedoch noch büschelartig gebündelten Fasern des Garns gebildet sind, während bei dem Vergleichsklebeband (Fig. 6) die klettfähigen Schlaufen 20 aus einzelnen Monofilamenten des Fadensystems 40 bestehen, aus dem das Gewirk gebildet ist. Die Oberflächenstruktur des erfindungsgemäßen Klebebandträgers 1 ist dabei makroskopisch betrachtet insgesamt gröber als die des Trägers 10 des Vergleichsklebebandes, was allerdings dem mikroskopischen Bildvergleich weniger deutlich zu entnehmen ist.

Die Erfindung ist nicht auf das dargestellte Ausführungsbeispiel beschränkt, sondern umfasst auch alle im Sinne der Erfindung gleichwirkenden Ausführungen. Ebenso beschränkt sich die Verwendung erfindungsgemäßer Klebebänder nicht auf die Bewicklung von Kabelsätzen, sondern diese sind, wie bereits vorstehend erwähnt wurde, auf Grund ihrer guten dämpfenden Eigenschaften und ihrer Abriebbeständigkeit sowie auf Grund ihrer Kletteigenschaften auch für weitere Einsatzzwecke, z. B. bei der Geräuschdämpfung und in der Befestigungstechnik, geeignet.

### Bezugszeichen

- 1: Träger
- 1a: Basisschicht von 1
- 1b: Polschicht von 1
- 2: Schlaufe, Polschlinge
- 3: Klebstoffbeschichtung
- 4: zusätzliches Fadensystem
- 5: Beschichtung, Kaschierung, unterseitig von 1
- 6: Polfüße von 2
- 7: Platine
- 8: Schiebernadel
- 9: Lochnadel
- 10: Träger (Vergleichsbeispiel)
- 11: Vliesfasern von 1a
- 12: Nähfaden von 1a
- 20: Schlaufe (Vergleichsbeispiel)
- 40: Garnmaterial (Vergleichsbeispiel)

- D: Dicke von 1
- H: Höhe von 2

## Patentansprüche

1. Auf sich selbst wickelbares Klebeband, mit einem bandförmigen textilen Träger (1), der aus einer aus Fasern (11) und/oder Fäden (12) gebildeten textilen Basisschicht (1a) aus einem Gewebe, aus einem Gewirk oder aus einem Vlies, insbesondere einem Nähvlies, besteht und der auf seiner Oberseite klettfähige Schlaufen (2) aufweist und auf dessen Unterseite eine selbstklebende Klebstoflbeschichtung (3) aufgebracht ist, welche aus einem druckempfindlichen kautschuk-oder acryrlathaltigem Haftklebstoff besteht. **dadurch gekennzeichnet, dass** die klettfähigen Schlaufen (2) als geschlossene Polschlingen (2) durch mindestens ein zusätzlich zu den Fasern (11) und/oder Fäden (12) der textilen Basisschicht (1a) vorhandenes Fadensystem (4) gebildet sind.

2. Klebeband nach Anspruch 1,
**dadurch gekennzeichnet, dass** die textile Basisschicht (1a) aus Zellwoll- oder aus Synthesefasern besteht.

3. Klebeband nach Anspruch 1 oder 2,
**dadurch gekennzeichnet, dass** die textile Basisschicht (1a) ein spezifisches Flächengewicht im Bereich von etwa 20 bis 300 g/m², vorzugsweise im Bereich von etwa 80 bis 150 g/m², aufweist.

4. Klebeband nach einem der Ansprüche 1 bis 3,
**dadurch gekennzeichnet, dass** die Unterseite des Trägers (1) durch eine Beschichtung (5) kaschiert ist, wodurch durch das Fadensystem (4) gebildete Polfüße (6) mit der textilen Basisschicht (1a) stoffschlüssig verbunden sind.

5. Klebeband nach einem der Ansprüche 1 bis 4,
**dadurch gekennzeichnet, dass** das zusätzliche Fadensystem (4) aus einem Garn gebildet ist.

6. Klebeband nach einem der Ansprüche 1 bis 4,
**dadurch gekennzeichnet, dass** das zusätzliche Fadensystem (4) eine Stärke von 35 bis 167 dtex, vorzugsweise von 50 bis 70 dtex, aufweist.

7. Klebeband nach einem der Ansprüche 1 bis 5,
**dadurch gekennzeichnet, dass** die Polschlingen (2) des zusätzlichen Fadensystems (4) eine Maschenreihendichte im Bereich von etwa 7 bis 22, vorzugsweise von etwa 18, pro 2,5 cm aufweisen.

8. Klebeband nach einem der Ansprüche 1 bis 7,
**dadurch gekennzeichnet, dass** die Polschlingen (2) des zusätzlichen Fadensystems (4) eine Maschenstäbchendichte im Bereich von etwa 5 bis 18, vorzugsweise von etwa 13, pro 2,5 cm aufweisen.

9. Klebeband nach einem der Ansprüche 1 bis 8,
**dadurch gekennzeichnet, dass** die Polschlingen (2) des zusätzlichen Fadensystems (4) eine Polhöhe (H) von etwa 1 mm bis 8 mm, vorzugsweise von etwa 2 mm bis 4 mm, aufweisen.

10. Klebeband nach einem der Ansprüche 1 bis 9,
**dadurch gekennzeichnet, dass** das zusätzliche Fadensystem (4) aus einem Polyolefin, insbesondere Polypropylen, aus einem Polyamid, insbesondere PA 6 oder PA 6,6, oder einem Polyester, insbesondere PET, besteht.

11. Klebeband nach einem der Ansprüche 1 bis 10,
**dadurch gekennzeichnet, dass** das zusätzliche Fadensystem (4) durch Nähen, Wirken, Weben oder Nähwirken gebildet ist.

12. Klebeband nach einem der Ansprüche 1 bis 11,
**dadurch gekennzeichnet, dass** die Materialdicke (D) des Trägers (1) im Bereich von etwa 0,3 bis 3,0 mm, vorzugsweise von etwa 1,1 bis 2,4 mm, liegt.

13. Klebeband nach einem der Ansprüche 1 bis 12,
**dadurch gekennzeichnet, dass** der Träger (1) in Längsrichtung eine Reißdehnung im Bereich von etwa 10 bis 80 Prozent aufweist.

14. Klebeband nach einem der Ansprüche 1 bis 13,
**dadurch gekennzeichnet, dass** der Träger (1) in Längsrichtung eine Reißfestigkeit von etwa 20 bis 300 N/cm, vorzugsweise 25 bis 70 N/cm, aufweist.

15. Klebeband nach einem der Ansprüche 1 bis 14,
**dadurch gekennzeichnet, dass** die Grammatur der Klebstoffbeschichtung (3) im Bereich von etwa 20 bis 300 g/m², vorzugsweise von 80 bis 150 g/m², vorzugsweise im Bereich von etwa 100 bis 120 g/m², liegt.

## Claims

1. An adhesive tape, rollable on itself, with a strip-type textile substrate (1) comprising a textile basic layer (1a) made from a woven fabric, a knitted fabric or a non-woven fabric, in particular a sewn non-woven fabric, which layer is formed from fibres (11) and/or threads (12), and which has hookable loops (2) on its upper side and to the underside of which is applied a self-sticking adhesive coating (3) which consists of a pressure-sensitive rubber- or acrylate-containing contact adhesive, **characterised in that** the hookable loops (2) are formed as closed pile loops (2) by at least one thread system (4) provided in addition to the fibres (11) and/or threads (12) of the textile basic layer (1a).

2. An adhesive tape according to claim 1, **characterised in that** the textile basic layer (1a) consists of rayon staple fibres or synthetic fibres.

3. An adhesive tape according to claim 1 or 2, **characterised in that** the textile basic layer (1a) has a specific basis weight in the range from approximately 20 to 300 g/m², preferably in the range from approximately 80 to 150 g/m².

4. An adhesive tape according to any one of claims 1 to 3, **characterised in that** the underside of the substrate (1) is covered by a coating (5), whereby pile bases (6) formed by the thread system (4) are connected to the textile basic layer (1a) so as to form a material bond.

5. An adhesive tape according to any one of claims 1 to 4, **characterised in that** the additional thread system (4) is formed from a yarn.

6. An adhesive tape according to any one of claims 1 to 4, **characterised in that** the additional thread system (4) has a thickness of 35 to 167 dtex, preferably 50 to 70 dtex.

7. An adhesive tape according to any one of claims 1 to 6, **characterised in that** the pile loops (2) of the additional thread system (4) have a course density in the range from approximately 7 to 22, preferably approximately 18, per 2.5 cm.

8. An adhesive tape according to any one of claims 1 to 7, **characterised in that** the pile loops (2) of the additional thread system (4) have a wale density in the range from approximately 5 to 18, preferably approximately 13, per 2.5 cm.

9. An adhesive tape according to any one of claims 1 to 8, **characterised in that** the pile loops (2) of the additional thread system (4) have a pile height (H) of approximately 1 mm to 8 mm, preferably approximately 2 mm to 4 mm.

10. An adhesive tape according to any one of claims 1 to 9, **characterised in that** the additional thread system (4) consists of a polyolefin, in particular polypropylene, a polyamide, in particular PA 6 or PA 6.6, or a polyester, in particular PET.

11. An adhesive tape according to any one of claims 1 to 10, **characterised in that** the additional thread system (4) is formed by sewing, knitting, weaving or stitch-bonding.

12. An adhesive tape according to any one of claims 1 to 11, **characterised in that** the material thickness (D) of the substrate (1) lies in the range from approximately 0.3 to 3.0 mm, preferably approximately 1.1 to 2.4 mm.

13. An adhesive tape according to any one of claims 1 to 12, **characterised in that** the substrate (1) has an elongation at tear in the range from approximately 10 to 80 per cent in the longitudinal direction.

14. An adhesive tape according to any one of claims 1 to 13, **characterised in that** the substrate (1) has a tear strength of approximately 20 to 300 N/cm, preferably 25 to 70 N/cm, in the longitudinal direction.

15. An adhesive tape according to any one of claims 1 to 14, **characterised in that** the grammage of the adhesive coating (3) lies in the range from approximately 20 to 300 g/m², preferably 80 to 150 g/m², preferably in the range from approximately 100 to 120 g/m².

## Revendications

1. Bande adhésive pouvant s'enrouler sur elle-même, dotée d'un support textile (1) en forme de bande qui se compose d'une couche de base textile (la) formée par des fibres (11) et/ou des fils (12), d'un tissu, d'un maillage ou d'un non-tissé et qui présente sur sa face supérieure des boucles autoagrippantes (2) et sur la face inférieure duquel un revêtement adhésif autocollant (3) est appliqué qui se compose d'une colle autoadhésive à base de caoutchouc ou d'acrylate, sensible à la pression,
**caractérisée en ce que** les boucles autoagrippantes (2) sont réalisées sous la forme de boucles de velours fermées (2) par au moins un système de fils (4) présent en plus des fibres (11) et/ou des fils (12) de la couche de base textile (1a).

2. Bande adhésive selon la revendication 1, **caractérisée en ce que** la couche de base textile (1a) est formée à partir de fibres cellulosiques ou de fibres synthétiques.

3. Bande adhésive selon la revendication 1 ou 2, **caractérisée en ce que** la couche de base textile (1a) présente un grammage spécifique dans la plage d'environ 20 à 300 g/m², de préférence dans la plage d'environ 80 à 150 g/m².

4. Bande adhésive selon l'une quelconque des revendications 1 à 3, **caractérisée en ce que** la face inférieure du support (1) est doublée par un revêtement (5), de manière à ce que des bases du velours (6) formées par le système de fils (4) sont reliées à la couche de base textile (la) par contact de matière.

5. Bande adhésive selon l'une quelconque des revendications 1 à 4, **caractérisée en ce que** le système de fils supplémentaire (4) est réalisé à partir d'un filé.

6. Bande adhésive selon l'une quelconque des revendications 1 à 4, **caractérisée en ce que** le système de fils supplémentaire (4) présente une grosseur de 35 à 167 dtex, de préférence de 50 à 70 dtex.

7. Bande adhésive selon l'une quelconque des revendications 1 à 6, **caractérisée en ce que** les boucles du velours (2) du système de fils supplémentaire (4) présentent une densité de rangées de mailles dans la plage d'environ 7 à 22, de préférence d'environ 18, pour 2,5 cm.

8. Bande adhésive selon l'une quelconque des revendications 1 à 7, **caractérisée en ce que** les boucles du velours (2) du système de fils supplémentaire (4) présentent une densité de colonnes de mailles dans la plage d'environ 5 à 18, de préférence d'environ 13, pour 2,5 cm.

9. Bande adhésive selon l'une quelconque des revendications 1 à 8, **caractérisée en ce que** les boucles du velours (2) du système de fils supplémentaire (4) présentent une hauteur du velours (H) d'environ 1 mm à 8 mm, de préférence d'environ 2 mm à 4 mm.

10. Bande adhésive selon l'une quelconque des revendications 1 à 9, **caractérisée en ce que** le système de fils supplémentaire (4) se compose d'une polyoléfine, en particulier de polypropylène, d'un polyamide, en particulier de PA 6 ou de PA 6,6, ou d'un polyester, en particulier de PET.

11. Bande adhésive selon l'une quelconque des revendications 1 à 10, **caractérisée en ce que** le système de fils supplémentaire (4) est formé par couture, tricotage, tissage ou liage par piqûres.

12. Bande adhésive selon l'une quelconque des revendications 1 à 11, **caractérisée en ce que** l'épaisseur de matière (D) du support (1) se situe dans la plage d'environ 0,3 à 3,0 mm, de préférence d'environ 1,1 à 2,4 mm.

13. Bande adhésive selon l'une quelconque des revendications 1 à 12, **caractérisée en ce que** le support (1) présente dans la direction longitudinale une élongation à la rupture dans la plage d'environ 10 à 80 pourcents.

14. Bande adhésive selon l'une quelconque des revendications 1 à 13, **caractérisée en ce que** le support (1) présente dans la direction longitudinale une résistance à la déchirure d'environ 20 à 300 N/cm, de préférence de 25 à 70 N/cm.

15. Bande adhésive selon l'une quelconque des revendications 1 à 14, **caractérisée en ce que** le grammage du revêtement adhésif (3) se situe dans la plage d'environ 20 à 300 g/m², de préférence de 80 à 150 g/m², de préférence dans la plage d'environ 100 à 120 g/m².
